# EUROPEAN PATENT APPLICATION

(11) **EP 4 295 676 A1**
(43) Date of publication of application: **27.12.2023**
(21) Application number: 22179831.7
(22) Date of filing: 20.06.2022
(51) Int. Cl.: A01K 13/00

(54) **A WASHING DEVICE FOR WASHING A DOMESTIC ANIMAL**

(71) Applicant: Soosilla Ehitus OÜ, 61710 Kambja Vald (EE)
(72) Inventor: Toomsalu, Renee, Kambja Vald (EE)
(74) Representative: Aaltonen, Janne Lari Antero

(57) **Abstract**

A washing device (100) for washing a domestic animal (101), wherein the washing device comprises a washing tray (110) comprising a base (112), one or more side walls (114) and a first water outlet (116); an adjustable water distribution means (120) comprising a first end (122) connected to the washing tray (110) and a second end (124) positioned above the washing tray, wherein the first end comprises a water inlet (126), and the second end comprises a shower head (128).

## Description

### TECHNICAL FIELD

The present disclosure relates generally to the animal care products, more specifically to the washing devices for small domestic animals.

### BACKGROUND

Smaller domestic animals are for example rabbits, coats, pigs, dogs, cats, and other pets kept outdoors or indoors. Such animals are often kept in the gardens and taken to the walks on the streets or nature, where they get dirty. For the health of the pet or if the pet needs to be allowed inside the pet needs to be cleaned. In some cases, when the pet is playing outside in the garden or when the weather is rainy the pet may get very dirty and muddy, and thus cleaning with towel or the like is not sufficient and pet needs to be washed. Washing a pet may be challenging because many pets either don't like washing or there is something more exciting for them. In addition, washing a bet at regular shower room or bathroom is not hygienic.

Known pet washing devices are typically heavy weight metal constructions or stationary basin shower basins made of bricks which are not adjustable according to the pet's size, thus not suitable for home use for different pets in different sizes. Additional disadvantage of such devices is that the devices are not movable from one place to another, when, e.g., there is a need for garden maintenance, there is a need due to the weather conditions to move the device to some other location or due to some other reasons where it would be more convenient to wash and clean the pet.

For example, due to several reasons it may be for the pet more secure or more comfortable to move the washing device from one place to some other more suitable place. Such reasons may be too hot sun or other unpleasant weather conditions (e.g., wind, rain, snow), too much activities which distracts the pet, thus the device needs to be moved to the shadow, under the shelter or to some quiet place. Such various disturbing conditions may cause anxiety, nervousness or fear to the pet and therefore it is not possible to wash the pet because the pet wants to run away.

Thus, the known devices are not adjustable for different pets and are not possible to move from one place to another, e.g., from indoors to outdoors, use in different locations in gardens of private homes and summer cottages, and from outdoors to the indoors.

Therefore, in light of the foregoing discussion, there exists a need to overcome the aforementioned drawbacks associated with pet washing devices.

### SUMMARY

The aim of the present disclosure is to provide a washing device for washing a domestic animal which would be adjustable according to the size and needs of the domestic animal, wherein the domestic animal would feel safe, secure and calm during the washing procedure.

The aim of the disclosure is achieved by a washing device, which comprises a washing tray comprising a base, one or more side walls and a first water outlet; and an adjustable water distribution means comprising a first end connected to the washing tray and a second end positioned above the washing tray, wherein the first end comprises a water inlet, and the second end comprises a shower head.

The advantage of the present washing device is that the washing device is adjustable for animals in different sizes, more specifically the washing device can be adjusted in height so that it would be suitable for smaller and bigger animals. This is especially advantageous when the pet, e.g., a dog, grows in size multiple times, thus the washing is more efficient as the height of the shower head can be adjusted according to the pet's height. In addition to the height of the shower head the angle of the shower head can be also adjusted, which enables to direct the flow of water in the desired direction. As the height and the angle of the shower head is adjustable, the washing device folded easily for moving or transporting to some other location or for storing purposes while the device is not in use.

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the embodiments of the disclosure are shown in the drawings, with references to the following diagrams wherein:
Fig. 1 is an illustrative side view of a washing device in accordance with an embodiment of the present disclosure.
Fig. 2 is an illustrative front view of a washing device in accordance with an embodiment of the present disclosure;
Fig. 3 is an illustrative front view of a washing device in accordance with an embodiment of the present disclosure; and
Fig. 4 is an illustrative side view of a washing device in accordance with an embodiment of the present disclosure.

### DETAILED DESCRIPTION OF EMBODIMENTS

The following detailed description illustrates embodiments of the present disclosure and ways in which they can be implemented.

In an aspect, an embodiment of the present disclosure provides a washing device for washing a domestic animal, wherein the washing device comprises a washing tray comprising a base, one or more side walls and one or more first water outlets; an adjustable water distribution means comprising a first end connected to the washing tray and a second end positioned above the washing tray, wherein the first end comprises a water inlet, and the second end comprises a shower head.

The domestic animal may be e.g., a rabbit, a coat, a lamb, a pig, a dog, a cat, and other pet who needs washing due to getting dirty. Thus, due to the different sizes of the domestic animals the wall of the washing tray in different embodiments may be lower or higher. Specifically, the "lower" and "higher" refers to a height of the walls of the washing tray according to the size of the pet so that the pet would be able to step into the washing device, that is for rabbits, pigs, cats, puppies and small dogs the walls of the washing tray are lower, i.e., suitable for their height and for coats, lambs, medium and bigger size dogs the walls of the washing tray are higher, i.e., suitable for their height. Higher walls of the washing tray have further advantage as in such embodiment the walls enable to accommodate water in the washing tray forming a washbasin, a bath or washtub like container. Such a container enables more efficient washing of the pet and provides for the pet also cooling option during hot weather.

The base of the washing tray is a stepping plate, i.e., a plate where the pet steps and on which the pet stands or sits during washing. In some embodiments, a surface of the base is at least partially covered with slipping prevention means. The slipping prevention means may be roughened surface or the surface may comprise dots or the like to prevent slipping.

The adjustable water distribution means enable to adjust the height of the washing device according to the pet's height. The height of the washing device is adjustable by moving the adjustable water distribution means upwards and downwards. The position of the adjustable water distribution means can be adjusted either manually or automatically by an actuator.

In some embodiment, the water tray may comprise two or more first water outlets to ensure faster water drain of used water. This may be useful when it is needed to avoid collecting used dirty water into the water tray or to empty the water tank faster.

In the embodiments, the adjustable water distribution means is formed of wrinkled hose or telescopic tube. Optionally, the wrinkled hose or telescopic tube may comprise foldable or telescopic housing. Alternatively, the hose or tube part of adjustable water distribution means may be formed of a bellows like structure. The water inlet is adapted to be connectable with e.g., a shower hose of the bathroom when the washing device is used indoors or e.g., a garden hose when the washing device is used outdoors.

Optionally, the washing device may comprise at the second end of the adjustable water distribution means a joint connecting the shower head. The joint enables to adjust an angle of the shower head to regulate the angle of water flow of the shower at which the water is flowing. The joint enables to regulate the angle of water flow of the shower at which the water is flowing. The angle can be adjusted automatically or manually.

Optionally, the at least one of a height and an angle of the shower head is adjustable according to a height and a size of the domestic animal.

In some embodiments, the base comprises shower actuating means configurable to start the shower based on a weight of the domestic animal. The shower actuating means enable to actuate the shower when the pet steps to the base. Optionally, the shower actuating means can be adjustable according to the pet's weight. The shower actuating means comprise a spring, hinge, joint or the like mechanism, which enables to open the water flow into the shower head. I.e., in some embodiments the base, i.e., the plate where the pet steps, may comprise adjustable springs that can be arranged to start the shower based on weight of the pet by adjusting the springs according to the pet's weight.

In some embodiments, the washing tray comprises a water tank underneath the base. The water tank enables to collect some water before the washing or during the washing to make the washing device heavier to stabilize the device and to avoid the washing device falling over. This is especially advantageous when the pet does not stay calm and steady but wants to move around during washing. Making the washing device temporarily heavier helps to stabilize the device also in the wind. Optionally, the water tank comprises one or more second water outlets. Water outlets enable emptying the tank, e.g., when the device needs to be moved or transported to another location, the tank can be emptied, by opening the water outlet and let the water to flow out, to make the device lighter and thus enable easier moving on transporting. In such embodiments wherein the washing device comprises a water tank the one or more second water outlets are lower than the first water outlet to enable adjusting the water level in the tank or water drain from the device. E.g., when the one or more second water outlets are closed then the water can be directed out from the washing device through the first water outlet by means of overflow but at the same time there is still water kept in the lower part of the tank which enables to keep the washing device stabilized.

In some embodiments, the base of the washing tray comprises a water drain. The washing drain enables the water to flow from the upper part of the base to the water tank underneath the base. This makes the washing more efficient as the dirty water can be directed out the washing try. Optionally, the water drain may comprise a water valve. The water valve enables opening and closing of the water drain to control the water flow out from the water tank.

To avoid letting pet's hair, dirt and mud to get into the water channel, in different embodiments, the at least one of the water drain, the first water outlet and the second water outlet may comprise a filter.

In some embodiments, the washing tray comprises adjustable legs. The adjustable legs enable to stabilize the washing device when the device is used on uneven ground.

Optionally, in some embodiments, the washing device further comprises one or more of a drying means, a water heating means. The drying means can be e.g., a dryer for during the pet's fur. The water heating means may be attached to the water inlet to warm up the water if the washing device is connected with the garden hose.

Optionally, in some embodiments, the washing device may further comprises one or more of a shampoo holder, a sponge holder, a brush holder, a treats holder, a towel holder. The shampoo, the sponge, the brush help to make the washing more efficient. The treats holder for the treats may be needed to keep treats for calming down the pet during washing. The towel holder may be needed for the towel which can be used for drying the pet after washing. For the pet owner may be more comfortable if such means are on hand when washing the pet.

Optionally, the washing device may further comprise one or more actuators. The washing device may comprise a first actuator for starting the water flow automatically and the second actuator to adjust the height of the adjustable water distribution means or the angle of the shower head automatically. This enables more efficient showering as the pet owner or the person who washed the pet can focus on washing and doesn't have to be worried about adjusting and regulating the washing device.

### DETAILED DESCRIPTION OF THE DRAWINGS

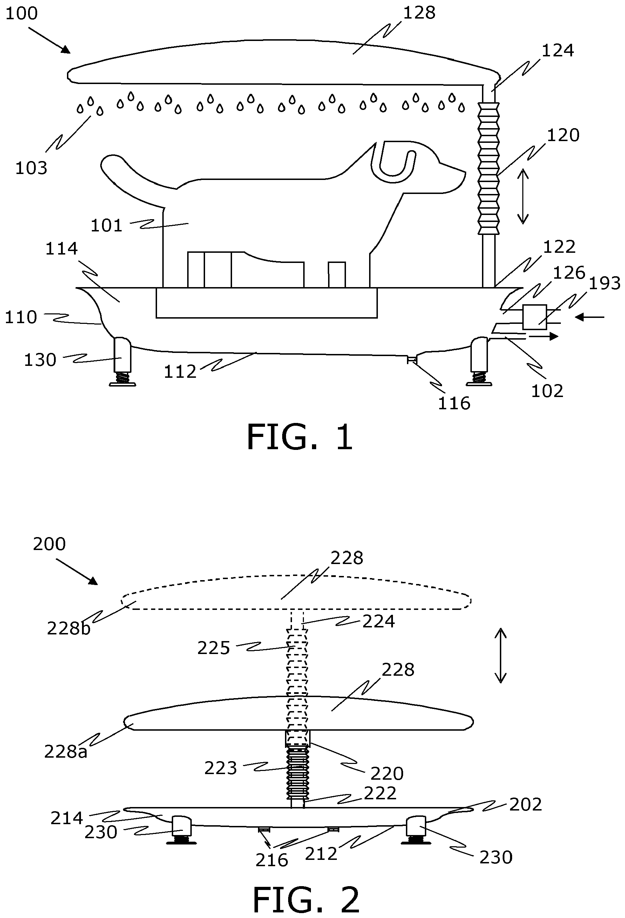

Referring to FIG. 1, there is shown an illustrative side view of a washing device in accordance with an embodiment of the present disclosure, wherein a pet, such as a medium size dog **101** is in the washing device **100.** The washing device **100** for washing the dog **101,** comprises a washing tray **110** comprising a base **112,** one or more side walls 114 and a first water outlet **116** and a second water outlet **102** and adjustable legs **130.** The washing device further comprises an adjustable water distribution means **120** formed of a wrinkled hose or telescopic tube comprising a first end **122** connected to the washing tray **110** and a second end **124** positioned above the washing tray, wherein the first end comprises a water inlet **126,** and the second end comprises a shower head **128.** The washing device further comprises one or more actuators **193.**

Referring to FIG. 2, there is shown an illustrative front view of a washing device **200** in accordance with an embodiment of the present disclosure, wherein the shower head **228** is shown in lower position **228a** and higher position **228b,** by changing the height of the adjustable water distribution means **220** formed of a wrinkled hose or telescopic tube. The shower head is adjusted to the lower position when the adjustable part of the adjustable water distribution means is in compressed position **223** and the shower head is adjusted to the higher position when the adjustable part of the adjustable water distribution means is in elongated position **225.** The embodiment of FIG. 2 further illustrates washing tray **210** having lower side walls **214** and two first water outlets **116.**

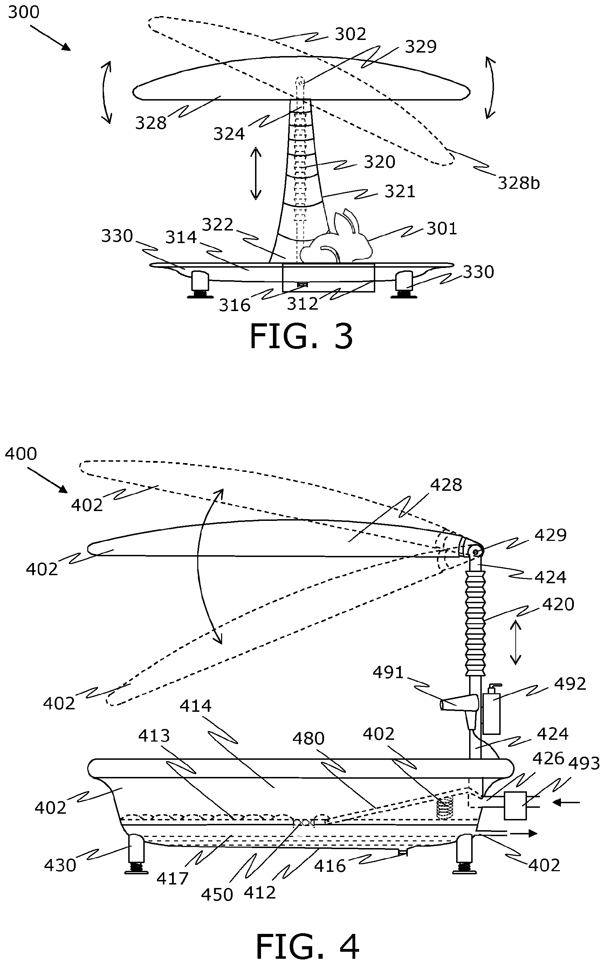

Referring to FIG. 3, there is shown an illustrative front view of a washing device **300** in accordance with an embodiment of the present disclosure, wherein a small size pet, such as a rabbit **301** is in the washing device **100.** In the embodiment the washing device **300** comprises a washing tray **310** comprising a base **312,** one or more side walls **314** and a first water outlet **316,** an adjustable water distribution means **320** formed of a wrinkled hose or telescopic tube comprising a first end **322** connected to the washing tray **310** and a second end **324** positioned above the washing tray, wherein the second end comprises a shower head **328** and wherein the wrinkled hose or telescopic tube is covered by foldable or telescopic housing **321.** The second end **324** of the adjustable water distribution means comprises a joint **329** connecting the shower head **328.**

Referring to FIG. 4, there is shown an illustrative side view of a washing device **400** in accordance with an embodiment of the present disclosure. The washing device **400** comprises a washing tray **410** comprising a base **412,** one or more side walls **414** and a first water outlet **416,** an adjustable water distribution means **420** formed of wrinkled hose or telescopic tube comprising a first end **422** connected to the washing tray **410** comprising a water tank **417** and a second end **424** positioned above the washing tray, wherein the first end comprises a water inlet **426,** and the second end comprises a shower head **428.**

The base comprises shower actuating means **480** configurable to start the shower based on a weight of the domestic animal and a base of the washing tray comprises a water drain **450** having a water valve **451.** The water tank comprises one or more second water outlets **402.** The second end **424** of the adjustable water distribution means comprises a joint **429** connecting the shower head **428.** A surface of the base is at least partially covered with slipping prevention means **413.** The washing tray comprises adjustable legs **430.** In the embodiment, the washing device further comprises a drying means **491,** a shampoo holder **492** and one or more actuators **493.**

## Claims

1. A washing device (100, 200, 300, 400) for washing a domestic animal (101, 301), wherein the washing device comprises a washing tray (110, 210, 310, 410) comprising a base (112, 212, 312, 412), one or more side walls (114, 214, 314, 414) and one or more first water outlets (116, 216, 316, 416);
an adjustable water distribution means (120, 220, 320, 420) comprising a first end (122, 222, 322, 422) connected to the washing tray (110, 210, 310, 410) and a second end (124, 224, 324, 424) positioned above the washing tray, wherein the first end comprises a water inlet (126, 426), and the second end comprises a shower head (128, 228, 328, 428).

2. The washing device according to any of preceding claims, wherein the base comprises shower actuating means (480) configurable to start the shower based on a weight of the domestic animal.

3. The washing device according to any of preceding claims, wherein the adjustable water distribution means (120, 220, 320, 420) is formed of wrinkled hose or telescopic tube.

4. The washing device according to any of preceding claims, wherein the washing tray (110, 210, 310, 410) comprises a water tank (417) underneath the base.

5. The washing device according to any of preceding claims, wherein the water tank comprises one or more second water outlets (102, 402).

6. The washing device according to any of preceding claims, wherein the washing tray comprises a water drain (450).

7. The washing device according to any of preceding claims, wherein the water drain comprises a water valve (451).

8. The washing device according to any of preceding claims, wherein the at least one of the water drain (450), the first water outlet (116, 216, 316, 416) and the second water outlet (102, 402) comprises a filter.

9. The washing device according to any of preceding claims, wherein the second end (324, 424) of the adjustable water distribution means comprises a joint (329, 429) connecting the shower head (328, 428).

10. The washing device according to any of preceding claims, wherein a surface of the base is at least partially covered with slipping prevention means (413).

11. The washing device according to any of preceding claims, wherein the washing tray comprises adjustable legs (130, 230, 330, 430).

12. The washing device according to any of preceding claims, wherein the washing device further comprises one or more of a drying means (491), a water heating means.

13. The washing device according to any of preceding claims, wherein the washing device further comprises one or more of a shampoo holder (492), a sponge holder, a brush holder, a treats holder, a towel holder.

14. The washing device according to any of preceding claims, wherein the washing device further comprises one or more actuators (193, 493).

15. The washing device according to any of preceding claims, wherein at least one of a height and an angle of the shower head is adjustable according to a height and a size of the domestic animal.
